# EUROPEAN PATENT SPECIFICATION

(11) **EP 4 323 643 B1**
(45) Date of publication and mention of the grant of the patent: **06.05.2026**
(21) Application number: 22718065.0
(22) Date of filing: 07.04.2022
(51) Int. Cl.: F03D 13/25, B63B 35/44

(54) **OFFSHORE WIND TURBINE WITH A FLOATING PLATFORM**
OFFSHORE-WINDTURBINE MIT EINER SCHWIMMENDEN PLATTFORM
ÉOLIENNE EN MER DOTÉE D'UNE PLATEFORME FLOTTANTE

(30) Priority: 12.04.2021 DK PA202170169
(43) Date of publication of application: 21.02.2024
(73) Proprietor: Stiesdal Offshore A/S, 7323 Give (DK)
(72) Inventor: STIESDAL, Henrik, 5000 Odense (DK)
(74) Representative: Patrade A/S
(86) International application number: PCT/DK2022/050073
(87) International publication number: WO 2022/218488

(56) References cited:
- WO-A1-2009/064737
- CN-A- 110 949 633
- ES-B2- 2 694 449
- FR-A1- 2 985 550
- GB-A- 2 466 477
- US-A1- 2014 060 411

## Description

### Field of the Invention

The present invention relates to a floating platform for a wind turbine. In particular, it relates to a wind turbine and floating structure as disclosed in the preamble of the independent claim.

### Background of the invention

### Description of Prior Art

For floating platforms for offshore wind turbines, triangular shapes are often preferred due to their high degree of stiffness relatively to size and, thus, also with respect of the necessary material, which is substantial for large wind turbines. Examples are given in WO 2017/157399, WO 2009/064737 A1 and US 2014/060411 A1.

In triangular floating platforms, each corner of the triangle typically comprises one or more vertical buoyancy columns, and the wind turbine tower is typically positioned in the center of the triangle. However, for large wind turbine towers, this arrangement implies challenges for the assembly, since the assembly crane has to reach from the periphery of the platform to the center of the platform, which can be up to 35 m or more. In some configurations of triangular floating platforms, it has been preferred to position the wind turbine above one of the corners, since it can then be easily reached by the crane. A corner position has turned out not to be optimal, however, since the added weight of the turbine on one corner needs to be compensated by similar weight added to the two other corners. Installing a 2000-ton turbine on one corner thereby leads to a need to add 1000 tons of ballast at each of the two other corners. This significant addition of balancing ballast typically leads to an undesirable draft, which will often exceed 12 m. A draft not exceeding 8 m would be preferable, since this significantly expands the number of ports available for floating offshore wind installations.

It is the objective of the invention to disclose a configuration of a triangular floating offshore wind platform that significantly reduces the crane reach required for turbine installation while at the same time maintaining a moderate draft.

### Summary/Description of the invention

It is an objective of the invention to provide an improvement in the art. In particular, it is an objective to provide an improved configuration for floating offshore platforms. This objective and further advantages are achieved with a system and method as described below and in the claims.

In short, the objective is achieved with an offshore wind turbine system comprising a wind turbine in combination with a floating platform. The platform comprises three buoyancy modules in corners of a triangular configuration. The tower is located off-centered near a baseline of the triangle midway or almost midway between two buoyancy modules that are located at the ends of the baseline.

The term "buoyancy module" is used for an element that provides buoyancy and/or stability to the platform. For example, the buoyancy module is a buoyancy tank or comprises a plurality of buoyancy tanks fitted together. Optionally, a buoyancy module comprises or is a vertical or near-vertical cylinder, a group of two or more vertical or near-vertical cylinders, or other configuration of relevant vertical or near-vertical vessels that are located at the corners of the triangular configuration and can provide buoyancy and/or stability to the platform.

As compared to the prior art, where the tower is supported in the center of a triangular configuration, the presented construction significantly reduces the outreach of the crane used to install the wind turbine on the platform.

As compared to the prior art, where the tower is supported in a corner of a triangular configuration, the presented construction requires less ballasting to counterbalance the weight of the load of the wind turbine, as not one but two buoyancy modules are used to support the turbine. This reduces the operational depth when the turbine is installed.

For example, installing an offshore wind turbine with a power rating of 15 MW would typically require a water depth in the order of 12 m for a corner location of the wind turbine, whereas this presented construction only requires a depth in the order of 8 m, seeing that two corner buoyancy modules, one at each end of the baseline, support the tower.

It is pointed out that this typically implies that the third buoyancy module is provided with some ballast to balance the platform, for example a ballast on the order of one-third to two-thirds of the weight of the wind turbine.

In more detail, the offshore platform comprises a tower support, for example tower support column, which carries the tower of the wind turbine, the tower carrying a wind rotor. The platform comprises three buoyancy modules. For example, each module comprises a group of buoyancy members, for example a group of two, three or more buoyancy members, such as buoyancy tanks. The buoyancy modules are lighter than water and provide buoyancy to the platform when in water. The three modules are arranged in a triangular configuration in corners of an isosceles triangle, which has a base line and two equally long sides extending from two base corners at ends of the baseline and meeting at a top corner of the triangle. Optionally, the isosceles triangle is an equilateral triangle with three equally long sides.

In some embodiments, the center axis of the tower is located equidistant to the base corners and located on the baseline. Alternatively, it is located at a distance to the baseline, inside or outside of the triangle. Advantageously the distance is in the range of 0-15% of the length L of the baseline, for example 0-15% of the length L of the baseline.

For example, the tower is located on a line that extends from the top corner through the middle of the base line.

Although, the typical position of the center axis of the tower is in the middle of the base line, a slight deviation from the equidistance to the baseline corners is also possible. For example, the deviation is within 2 % to 10 %, such as with 2 % to 5 %.

A 10% deviation from an equidistant configuration would imply that the distance to one baseline corner is 0.55L and to the other baseline corner is 0.45L, each distance from the centerline of the tower to the baseline corners being reduced or enlarged by 10% of L/2.

But typically, the deviation is less and rather in the range of 2 % to 5 %. A minor asymmetry can be advantageous in that it may reduce eigenfrequency issues whilst maintaining the required load and support capability.

In some practical embodiments, the platform comprises a frame of rigid tubular members, in particular braces, that are connecting the buoyancy modules with the tower support. A convenient and useful configuration is a tetrahedral or approximately tetrahedral configuration.

For example, the frame comprises an arrangement of braces where each buoyancy member is connected to the tower support with a support brace connecting the buoyancy member to the base of the tower support and with an additional brace that are connecting the buoyancy module to the upper part, for example top, of the tower support. Advantageously, the buoyancy modules may be connected to each other with supplementary braces. This arrangement of braces may in total form a tetrahedral shape.

For example, the method of installation of the tower comprises an act of locating the floating platform adjacent to a quay wall with the tower support, such as tower support column, arranged separately from the buoyancy modules and arranged with the centerline of the tower in a position on or adjacent to the base line, near or at the center of the baseline, with the base line arranged adjacent to the quay wall. The tower and the nacelle and rotor are then installed on the tower support of the floating platform. Following this installation, the floating platform may be towed to the final location offshore. This arrangement allows for installing the wind turbine directly on the floating platform while the floating platform is in the port without requiring excessive crane reach even in a port with relatively low depth adjacent to the quay wall. Two buoyancy modules, for example buoyancy tanks, will support the weight of the wind turbine whilst the third buoyancy module, for example buoyancy tank, will provide counterweight and stability.

The third buoyancy member is at a significant distance and will not require very substantial ballasting. The entire arrangement allows for placing even large-scale load on large scale floating platforms in ports with otherwise imposed limits caused by the depth.

As an example, a 15 MW wind turbine may be installed on a floating platform as disclosed docked at a quay in a port with a depth of no more than 8 m. Advantageously, the draft during installation, i.e. whilst floating, of any buoyancy member may be less than 8 m. The draft, also during installation, of the third buoyancy member may be less than 8 m, less than 6 m, or less than 4 m.

### Brief description of drawings

Embodiments of the invention will be described in the figures, wherein:
- Fig. 1: illustrates a triangular construction principle for a floating platform for a wind turbine;
- Fig. 2: illustrates a wind turbine on a floating platform;
- Fig. 3: illustrates a top view of the floating platform of FIG. 2;
- Fig. 4: illustrates an alternative embodiment;
- Fig. 5: illustrates a further alternative embodiment;
- Fig. 6: illustrates the floating platform in use in deep sea, when exposed to a) a calm water surface, b) low waves, and c) high waves.

### Detailed description of the invention

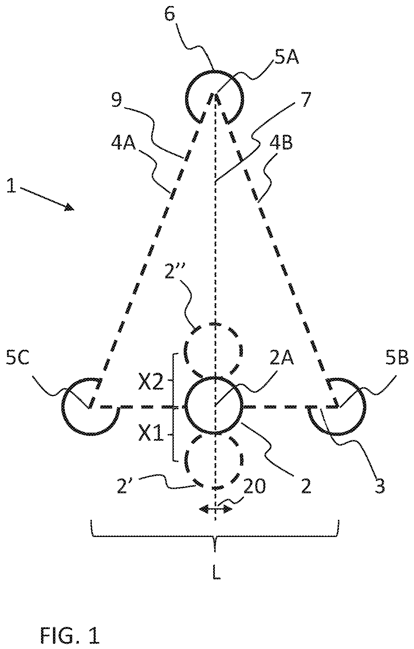

FIG. 1 is a sketch for explaining the principle of a triangular platform 1 and the location of the wind turbine tower 2 on the platform 1. At the corners 5A, 5B, 5C, buoyancy modules 6 are provided, which are dimensioned for providing sufficient buoyancy for holding the platform 1 with the wind turbine at the surface of the water, in which the offshore platform 1 is floating.

The reference triangle 9, which is used for describing the triangular shape of the platform 1 as well as the location of the tower 2, extends from the centers of single buoyancy modules 6.

However, in typical practical cases, the buoyancy module 6 in each corner 5A, 5B, 5C is not a single member but a group of buoyancy members, for example tanks. The center of the buoyancy module 6 then has to be constructed as the center for the plurality of buoyancy members, for example the center between the two buoyancy members in a pair of buoyancy members.

In the current exemplification, the triangle 9 is an isosceles triangle with a base line 3 and two equally long sides 4A, 4B that meet at the top corner 5A. However, it could also be an equilateral triangle.

The tower 2 is located on an imaginary line 7 that extends from the top corner 5A through the middle of the base line 3. For example, the line 7 follows a tubular support brace as part of a frame of the platform 1.

Typically, the tower 2 is positioned with its center 2A located on the middle of the baseline 3. However, in some embodiments, the center of the tower 2 is outside the triangle 9 and dislocated a distance X1 from the baseline 3, which is indicated with the reference number 2'. This configuration has an advantage of coming closer to the crane that is mounting the tower 2 onto the platform, especially when the buoyancy modules cover a large diameter.

As will be shown in greater detail below, this is advantageous when the buoyancy modules 6 are arranged in more complex configurations than illustrated in FIG. 1. For example X1 is in the range of 0-15% of the length L of the baseline, potentially 0-10% of the length L.

Alternatively, the tower 2 is optionally located inside the triangle, dislocated a distance X2 from the baseline 3 towards the center of the triangle 9. This is indicated by the reference number 2". For example X2 is in the range of 0-15% of the length L of the baseline, potentially 0-10% of the length L. This is advantageous in resulting in a lower necessary depth for the platform during mounting, as the weight of the wind tower is loaded more onto the buoyancy module 6 at the top corner 5A.

Although, in most cases, the centerline 2A of the tower is located equidistant to the base corners 5B, 5C, in some cases, a slight deviation 20 from such equidistant configuration may be desired to counteract resonance frequencies. Such slight deviation 20 is typically less than 5% of L and would normally not exceed 10 % of L.

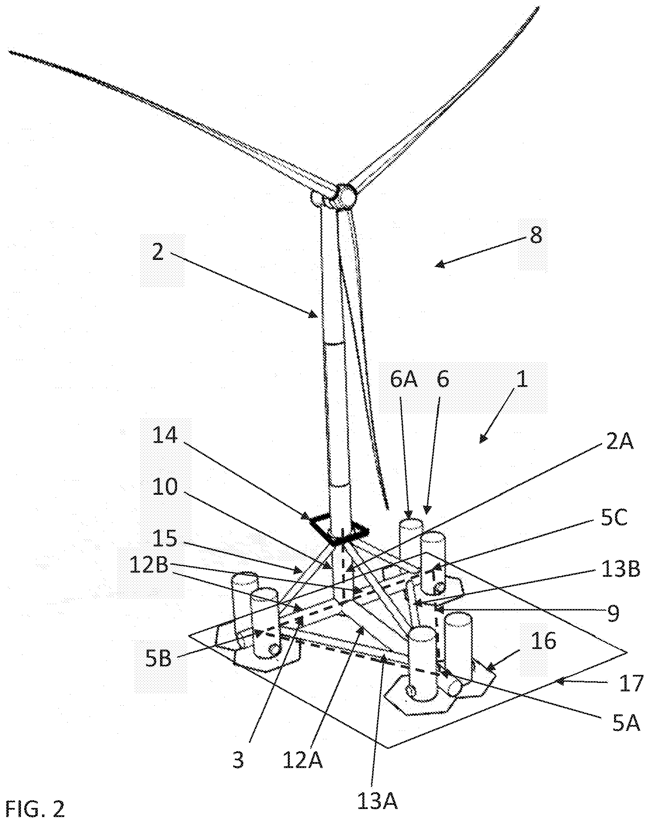

Figure 2 illustrates an example of a floating platform 1 configured to support a wind turbine 8. The platform 1 is configured with a tower support, in the form of a power support column 10, supporting the wind turbine tower 2. Three buoyancy modules 6, in the form of pairs of buoyancy members 6A, such as tanks, are providing buoyancy and stability. The buoyancy members 6A are arranged at corners 5A, 5B, 5C of the planar triangle 9. At the lower end, each of the buoyancy member 6A is provided with a heave plate 16 for damping vertical motion in the sea. The heave plates 16 are within a reference plane 17, which is parallel to the reference triangle 9 and perpendicular to the center line 2A of the cylindrical tower 2. Optionally, the heave plates 16 are collapsible for convenience when maneuvering in a harbor.

The platform 1 achieves stability by a tubular structure, comprising a first support brace 12A, which extends from the most distal buoyancy module 6, at the top corner 5A, to the tower support column 10, and two further support braces 12B, possibly combined into a single further support brace, that extends from the tower support column 10 to each of the other two buoyancy modules 6 at the baseline corners 5B, 5C. Further stability is achieved by additional braces 13A and 13B that extend from the two further support braces 12B to the first support brace near the buoyancy module 6 that is most distal to the tower support column 10 at the tope corner 5A. The additional braces 13A, 13B form a planar triangular shape with the two further support braces 12B. As exemplified, this planar triangle is in the same plane as the reference triangle 9.

Stabilizer braces 15 extend from an upper end of the support tower support column 10 to each of the support braces 12A, 12B at the position of the buoyancy modules 6 in order to provide a rigid structure for the platform 1. The shape approximately resembles a tetrahedron.

A working platform 14 surrounds the tower 2 and is typically fastened to the to the tower 2.

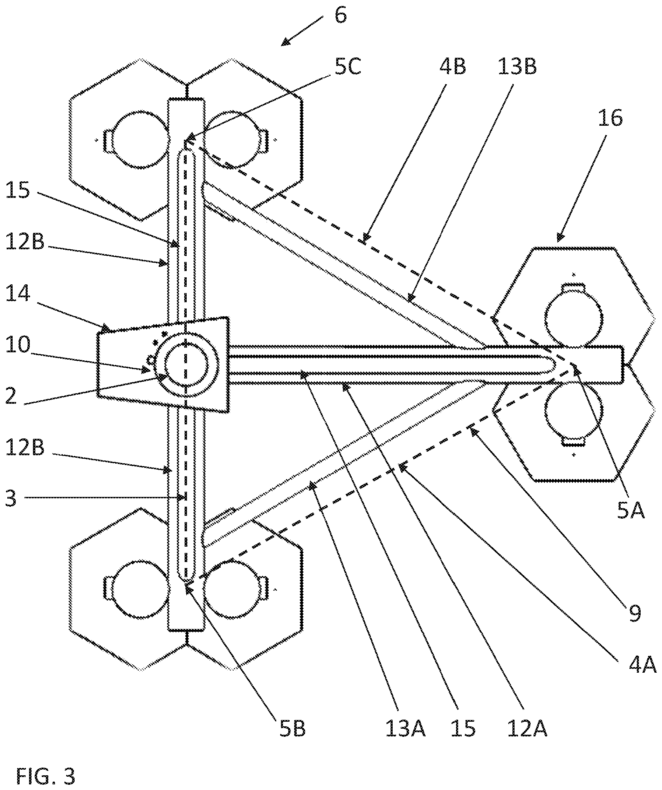

The support tower support column 10 is provided with its center line 2A on the base line 3 midway between the buoyancy members 6 and supporting the wind turbine tower 2. This is illustrated in more detail in FIG. 3, which is a top view.

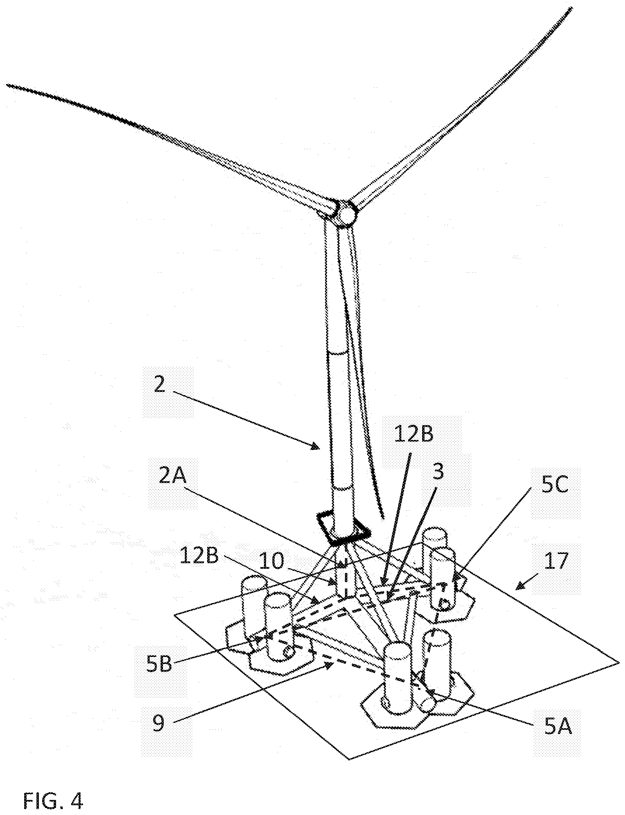

Whereas FIG. 2 and 3 illustrated the tower being located on the base line 3, FIG. 4 shows a further embodiment of the floating platform 1 corresponding to what was indicated with the reference number 2' in FIG. 1, namely a location of the tower outside the reference triangle and offset by a certain distance, for example corresponding to not more than 15% of the length of the base line 3. The two further support braces 12B are not parallel with the base line 3 but form an angle.

In comparison, whereas the embodiment of FIG. 2 and 3, the combination of the first support brace 12A and the further support braces 12B for a T-shape, the embodiment in FIG. 4 resembles an arrow shape.

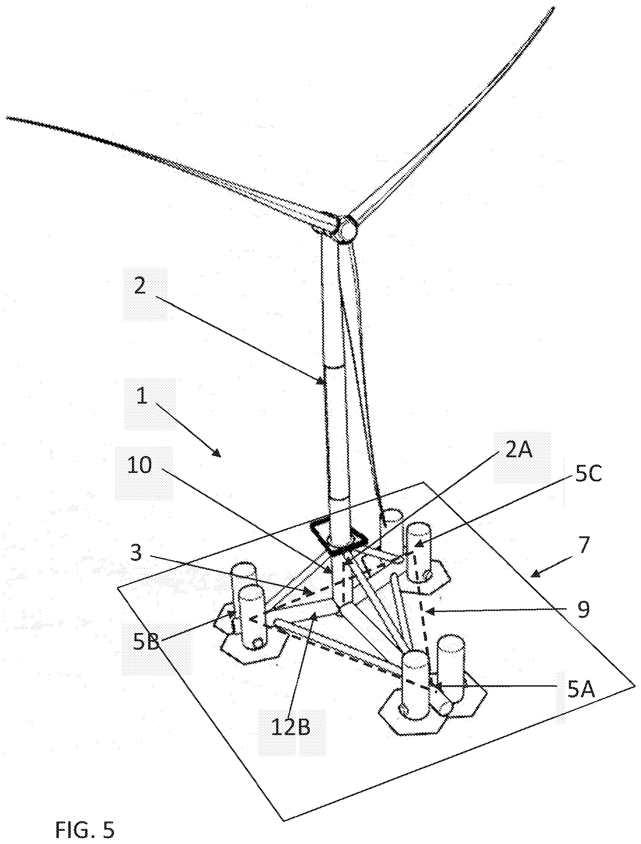

Figure 5 illustrates an embodiment of the floating platform 1 corresponding to what was indicated with the reference number 2" in FIG. 1, namely a location of the tower inside the reference triangle 9 and offset by a certain distance inward towards it, for example corresponding to no more than 15% of the length of the base line 3.

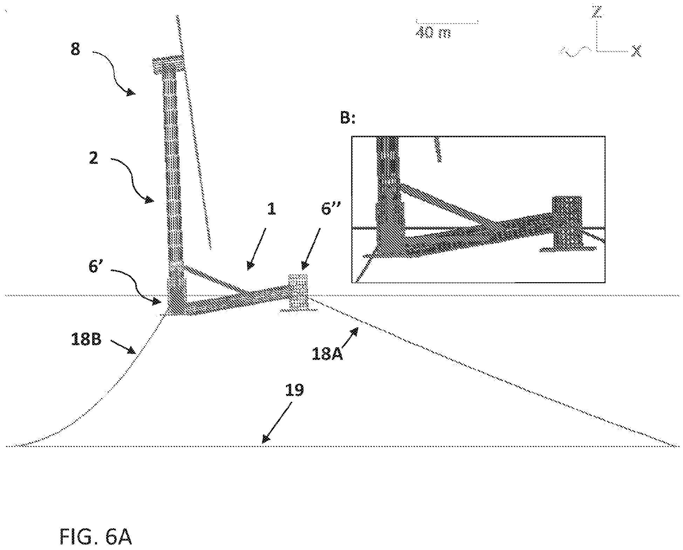

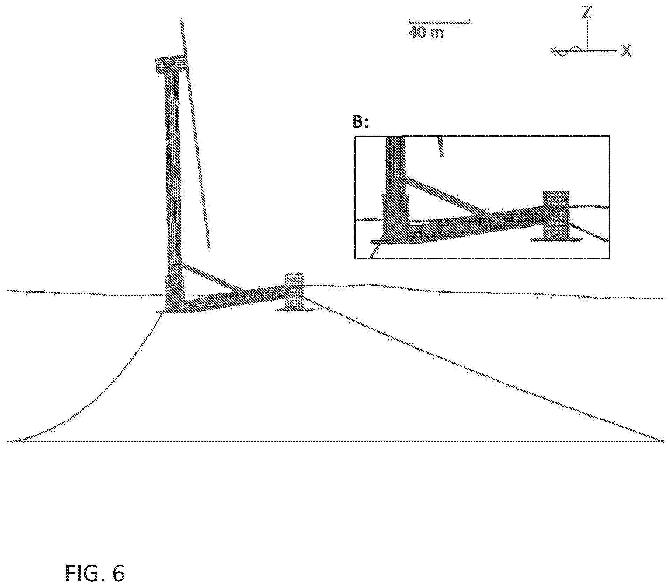

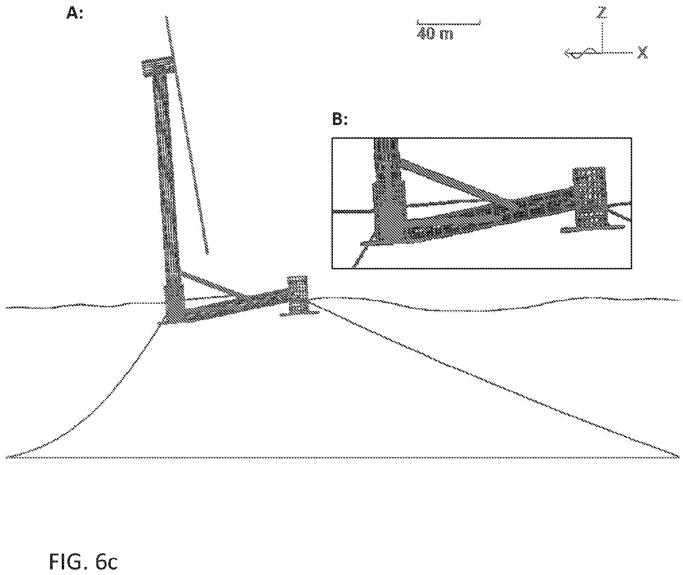

FIG. 6A, 6B, and 6C illustrate the turbine 8 on the platform 1 in three different situations with respect to waves. FIG. 6A illustrates a calm sea. Due to the weight of the wind turbine 8, which optionally is in the order of 2000 tons (2,000,000 kg) the two buoyancy modules 6' adjacent to the tower 2, which carry the weight of the tower 2, are deeper in the water than the buoyancy module 6" at larger distance to the tower 2. The increased inclination of the tower 2 due to increased wind, which is illustrated by the sequence of FIG. 6A, 6B, and 6C, presses this distal buoyancy module 6" out of the water so that the weight of the buoyancy module 6" as well as the weight of that part of the platform, which above the surface adds to stability. The degree by which this this distal buoyancy module 6" and a part of the platform 1 is pressed out of the water depends on the wind on the wind turbine. However, the combination of the adjacent buoyancy modules 6' being pressed further down and the distal buoyancy module 6" being pressed out of the water has a stabilizing effect during wave action on the platform 1 as well as wind press on the wind turbine 8. The platform is anchored to the seabed 19 by cables 18A, 18B.

## Claims

1. An offshore wind turbine system comprising a wind turbine (8) in combination with a floating platform (1), the platform (1) comprising a tower support (10) that carries a tower (2) of the wind turbine (8), the tower (2) carrying a wind rotor; wherein the platform (1) comprises three buoyancy modules (6) providing buoyancy to the platform (1) when in water, the three buoyancy modules (6) being arranged in a triangular configuration in corners (5A, 5B, 5C) of an isosceles triangle (9), optionally equilateral triangle, the triangle (9) having a base line (3) and two equally long sides (4A, 4B) extending from two base corners (5B, 5C) at ends of the baseline (3) and meeting at a top corner (5A) of the triangle (9), wherein the platform (1) comprises a frame of braces (12A, 12B, 13A, 13B, 15) rigidly connecting the buoyancy modules (6) with the tower support (10) in an approximate tetrahedral configuration,
**characterized in that**
the center axis of the tower (2) is located
- on the baseline (3) or at a distance (X1, X2) from the baseline (3), the distance being in the range of 0-15% of the length L of the baseline (3);
- equidistant to the base corners (5B, 5C) or deviating from such equidistant configuration by less than 10% of L.

2. System according to claim 1, wherein the center axis (2A) of the tower 2 is located outside the triangle (9).

3. System according to claim 1, wherein the center axis (2A) of the tower 2 is located inside the triangle (9).

4. System according to any one of the preceding claims, wherein the platform (1) comprises a frame of braces (12A, 12B, 13A, 13B, 15) rigidly connecting the buoyancy modules (6) with the tower support (10),
wherein the frame comprises a planar arrangement of braces (12A, 12B, 13A, 13B) of:
- a first support brace (12A) connecting the tower support (10) with the buoyancy module (6) at the top corner (5A);
- a further support brace (12B) to each of the buoyancy module (6) at the base corners (5B, 5C), connecting them rigidly to the tower support (10);
- additional braces (13A) and (13B) extending from opposite sides of the first support brace (12A) towards the buoyancy modules (6) at the base corners (5B, 5C) and forming a triangular configuration with the further support brace (12B) or further support braces (12B),
wherein the frame further comprises stabilizer braces (15) outside the plane of the planar arrangement (12A, 12B, 13A, 13B), the stabilizer braces (15) connecting the tower support (10) with the three buoyancy modules (6).

5. System according to claim 4, wherein the first support brace (12A) and the further support brace (12B) or further support braces (12B) connect to the base of the tower support (10), and the stabilizer braces (15) to an upper part of the tower support (10)

6. System according to any preceding claim, wherein the buoyancy modules (6) are dimensioned for reaching downwards into water to a depth of no more than 8 m for a wind turbine having a weight of 2,000,000 kg, when the platform (1) at the top corner (5A) is provided with a ballast having a weight that is in the range of 30-50% of the weight of the wind turbine.

7. System according to any preceding claim, wherein the center axis (2A) is located at a distance (X1, X2) from the baseline (3), the distance being in the range of 0-10% of the length L of the baseline (3), and deviating from the equidistant configuration by less than 5% of L.

8. System according to any one of the preceding claims, wherein the center axis of the tower (2) is located equidistant to the base corners (5B, 5C).

9. System according to any one of the preceding claims, wherein the buoyancy module (6) comprises a plurality of buoyancy tanks.

## Patentansprüche

1. Offshore-Windturbinensystem, umfassend eine Windturbine (8) in Kombination mit einer schwimmenden Plattform (1), wobei die Plattform (1) eine Turmstütze (10) umfasst, die einen Turm (2) der Windturbine (8) trägt, wobei der Turm (2) einen Windrotor trägt; wobei die Plattform (1) drei Auftriebsmodule (6) umfasst, die der Plattform (1), wenn sie im Wasser ist, Auftrieb bereitstellen, wobei die drei Auftriebsmodule (6) in einer dreieckigen Konfiguration in Ecken (5A, 5B, 5C) eines gleichschenkligen Dreiecks (9), optional eines gleichseitigen Dreiecks, angeordnet sind, wobei das Dreieck (9) eine Basislinie (3) und zwei gleich lange Seiten (4A, 4B) aufweist, die sich von zwei Basisecken (5B, 5C) an Enden der Basislinie (3) erstrecken und sich in einer oberen Ecke (5A) des Dreiecks (9) treffen, wobei die Plattform (1) einen Rahmen aus Streben (12A, 12B, 13A, 13B, 15) umfasst, der die Auftriebsmodule (6) in annähernd tetraedrischer Konfiguration starr mit der Turmstütze (10) verbindet,
**dadurch gekennzeichnet, dass**
die Mittelachse des Turms (2) wie folgt gelegen ist
auf der Basislinie (3) oder in einem Abstand (X1, X2) von der Basislinie (3), wobei der Abstand in dem Bereich von 0-15 % der Länge L der Basislinie (3) ist;
abstandsgleich zu den Basisecken (5B, 5C) oder um weniger als 10 % von L von einer solchen abstandsgleichen Konfiguration abweichend.

2. System nach Anspruch 1, wobei die Mittelachse (2A) des Turms 2 außerhalb des Dreiecks (9) gelegen ist.

3. System nach Anspruch 1, wobei die Mittelachse (2A) des Turms 2 innerhalb des Dreiecks (9) gelegen ist.

4. System nach einem der vorhergehenden Ansprüche, wobei die Plattform (1) einen Rahmen aus Streben (12A, 12B, 13A, 13B, 15) umfasst, der die Auftriebsmodule (6) starr mit der Turmstütze (10) verbindet,
wobei der Rahmen eine ebene Anordnung von Streben (12A, 12B, 13A, 13B) aus Folgendem umfasst:
einer ersten Stützstrebe (12A), die die Turmstütze (10) mit dem Auftriebsmodul (6) an der oberen Ecke (5A) verbindet;
einer weiteren Stützstrebe (12B) zu jedem der Auftriebsmodule (6) an den Basisecken (5B, 5C), die diese starr mit der Turmstütze (10) verbindet;
zusätzlichen Streben (13A) und (13B), die sich von gegenüberliegenden Seiten der ersten Stützstrebe (12A) in Richtung der Auftriebsmodule (6) an den Basisecken (5B, 5C) erstrecken und mit der weiteren Stützstrebe (12B) oder weiteren Stützstreben (12B) eine dreieckige Konfiguration ausbilden,
wobei der Rahmen ferner Stabilisierungsstreben (15) außerhalb der Ebene der ebenen Anordnung (12A, 12B, 13A, 13B) umfasst, wobei die Stabilisierungsstreben (15) die Turmstütze (10) mit den drei Auftriebsmodulen (6) verbinden.

5. System nach Anspruch 4, wobei sich die erste Stützstrebe (12A) und die weitere Stützstrebe (12B) oder weitere Stützstreben (12B) mit der Basis der Turmstütze (10) und die Stabilisierungsstreben (15) mit einem oberen Teil der Turmstütze (10) verbinden.

6. System nach einem der vorhergehenden Ansprüche, wobei die Auftriebsmodule (6) dimensioniert sind, um bei einer Windturbine, die ein Gewicht von 2.000.000 kg aufweist, bis zu einer Tiefe von höchstens 8 m nach unten ins Wasser zu reichen, wenn die Plattform (1) an der oberen Ecke (5A) mit einem Ballast bereitgestellt ist, der ein Gewicht aufweist, das in dem Bereich von 30-50 % des Gewichts der Windturbine ist.

7. System nach einem der vorhergehenden Ansprüche, wobei die Mittelachse (2A) in einem Abstand (X1, X2) von der Basislinie (3) gelegen ist, wobei der Abstand in dem Bereich von 0-10 % der Länge L der Basislinie (3) ist, und von der abstandsgleichen Konfiguration um weniger als 5 % von L abweicht.

8. System nach einem der vorhergehenden Ansprüche, wobei die Mittelachse des Turms (2) abstandsgleich zu den Basisecken (5B, 5C) gelegen ist.

9. System nach einem der vorhergehenden Ansprüche, wobei das Auftriebsmodul (6) eine Vielzahl von Auftriebstanks umfasst.

## Revendications

1. Système d'éolienne en mer comprenant une éolienne (8) en combinaison avec une plate-forme (1) flottante, la plate-forme (1) comprenant un support de tour (10) qui porte une tour (2) de l'éolienne (8), la tour (2) portant un rotor éolien ; dans lequel la plate-forme (1) comprend trois modules de flottabilité (6) assurant une flottabilité de la plate-forme (1) lorsqu'elle est dans l'eau, les trois modules de flottabilité (6) étant disposés selon une configuration triangulaire aux sommets (5A, 5B, 5C) d'un triangle isocèle (9), optionnellement d'un triangle équilatéral, le triangle (9) présentant une ligne de base (3) et deux côtés (4A, 4B) de même longueur s'étendant à partir de deux sommets de base (5B, 5C) situés au niveau d'extrémités de la ligne de base (3) et se rejoignant au niveau d'un sommet supérieur (5A) du triangle (9), dans lequel la plate-forme (1) comprend un cadre d'entretoises (12A, 12B, 13A, 13B, 15) reliant rigidement les modules de flottabilité (6) au support de tour (10) dans une configuration tétraédrique approximative, **caractérisé en ce que**
l'axe central de la tour (2) est situé
- sur la ligne de base (3) ou à une distance (X1, X2) de la ligne de base (3), la distance étant comprise dans la plage allant de 0 à 15 % de la longueur L de la ligne de base (3) ;
- à égale distance des sommets de base (5B, 5C) ou en s'écartant d'une telle configuration équidistante de moins de 10 % de L.

2. Système selon la revendication 1, dans lequel l'axe central (2A) de la tour 2 est situé à l'extérieur du triangle (9).

3. Système selon la revendication 1, dans lequel l'axe central (2A) de la tour 2 est situé à l'intérieur du triangle (9).

4. Système selon l'une quelconque des revendications précédentes, dans lequel la plate-forme (1) comprend un cadre d'entretoises (12A, 12B, 13A, 13B, 15) reliant rigidement les modules de flottabilité (6) au support de tour (10),
dans lequel le cadre comprend un agencement plan d'entretoises (12A, 12B, 13A, 13B) :
- d'une première entretoise de support (12A) reliant le support de tour (10) au module de flottabilité (6) au niveau du sommet supérieur (5A) ;
- d'une entretoise de support supplémentaire (12B) à chacun des modules de flottabilité (6) au niveau des sommets de base (5B, 5C), les reliant rigidement au support de tour (10) ;
- des entretoises supplémentaires (13A) et (13B) s'étendant de côtés opposés de la première entretoise de support (12A) vers les modules de flottabilité (6) au niveau des sommets de base (5B, 5C) et formant une configuration triangulaire avec l'entretoise de support supplémentaire (12B) ou les entretoises de support supplémentaires (12B),
dans lequel le cadre comprend en outre des entretoises de stabilisation (15) à l'extérieur du plan de l'agencement plan (12A, 12B, 13A, 13B), les entretoises de stabilisation (15) reliant le support de tour (10) aux trois modules de flottabilité (6).

5. Système selon la revendication 4, dans lequel la première entretoise de support (12A) et l'entretoise de support supplémentaire (12B) ou les entretoises de support supplémentaires (12B) sont reliées à la base du support de tour (10), et les entretoises de stabilisation (15) à une partie supérieure du support de tour (10).

6. Système selon l'une quelconque des revendications précédentes, dans lequel les modules de flottabilité (6) sont dimensionnés pour s'enfoncer dans l'eau jusqu'à une profondeur n'excédant pas 8 m pour une éolienne présentant un poids de 2 000 000 kg, lorsque la plate-forme (1) au niveau du sommet supérieur (5A) est pourvue d'un ballast présentant un poids qui est compris dans la plage allant de 30 à 50 % du poids de l'éolienne.

7. Système selon l'une quelconque des revendications précédentes, dans lequel l'axe central (2A) est situé à une distance (X1, X2) de la ligne de base (3), la distance étant comprise dans la plage de 0 à 10 % de la longueur L de la ligne de base (3), et s'écartant de la configuration équidistante de moins de 5 % de L.

8. Système selon l'une quelconque des revendications précédentes, dans lequel l'axe central de la tour (2) est situé à égale distance des sommets de base (5B, 5C).

9. Système selon l'une quelconque des revendications précédentes, dans lequel le module de flottabilité (6) comprend une pluralité de caisses de flottabilité.
